# EUROPÄISCHE PATENTSCHRIFT

(11) **EP 2 334 967 B1**
(45) Veröffentlichungstag und Bekanntmachung des Hinweises auf die Patenterteilung: **10.12.2014**
(21) Anmeldenummer: 09783022.8
(22) Anmeldetag: 15.09.2009
(51) Int. Cl.: F16L 25/00, F16L 33/01, F16L 33/22, F16L 47/24, F16L 13/14, F16L 37/138

(54) **ZWEITEILIGES VERBUNDFITTING**
TWO-PART COMPOSITE FITTING
RACCORD COMPOSITE EN DEUX PIÈCES

(30) Priorität: 16.09.2008 DE 102008047544
(43) Veröffentlichungstag der Anmeldung: 22.06.2011
(73) Patentinhaber: Viega GmbH & Co. KG, 57439 Attendorn (DE)
(72) Erfinder: SINOPLU, Sudi, 57439 Attendorn (DE); SCHNEIDER, Andreas, 57413 Finnentrop (DE)
(74) Vertreter: Cohausz & Florack
(86) Internationale Anmeldenummer: PCT/EP2009/061933
(87) Internationale Veröffentlichungsnummer: WO 2010/031760

(56) Entgegenhaltungen:
- EP-A2- 1 293 715
- WO-A1-98/01695
- WO-A1-98/51956
- US-A- 3 533 649
- US-A- 3 612 584
- US-A- 4 033 614
- US-A- 4 412 693
- US-A1- 2005 067 833

## Beschreibung

Die Erfindung betrifft ein Fitting zum dichten Verbinden an ein Rohrende eines einen Kunststoff aufweisenden Rohres, mit einem Grundkörper und mit einem Stützkörper, wobei der Grundkörper aus einem Metall besteht, wobei der Stützkörper als ein vom Grundkörper separates Teil aus einem Kunststoff ausgebildet ist und wobei der Grundkörper auf seiner Innenseite und der Stützkörper auf seiner Außenseite Mittel zum Verbinden aufweisen. Die Erfindung betrifft auch ein System mit einem solchen Fitting, mit einem Verbund- oder Mehrschichtrohr und mit einer Hülse sowie ein System mit einem solchen Fitting, mit einem Kunststoffrohr und mit einer Hülse. Die Erfindung betrifft weiterhin die Verwendung eines solchen Fittings zum Verbinden mit einem Verbund- oder Mehrschichtrohr sowie die Verwendung eines solchen Fittings zum Verbinden mit einem Kunststoffrohr.

Ein Fitting zum dichten Verbinden mit einem Rohr ist aus dem Stand der Technik der EP 0 728 979 A1 bekannt. Das Fitting (bzw. das Anschlussstück) besteht dabei vollständig aus einem Metall und weist einen Stützkörper (bzw. einen zylindrischen Abschnitt) auf, auf den das Rohr aufgesteckt wird. Mit dem Fitting und dem Rohr ist von außen ein Pressring verbunden, der zur Sicherung der Verbindung mit dem Fitting und dem Rohr mit einem Presswerkzeug verpresst wird.

Diese Rohrverbindung hat den Nachteil, dass bei der Verbindung mit einem Verbund- oder Mehrschichtrohr Undichtigkeiten auftreten können. So können zwischen dem Stützkörper aus Metall und dem Verbund- oder Mehrschichtrohr durch unterschiedliche Ausdehnungen bei Temperaturänderungen Lecks entstehen, die die gesamte Rohrverbindung undicht werden lassen. Um dies zu verhindern, kann ein zusätzliches Dichtungselement, beispielsweise ein O-Ring, verwendet werden. Dies führt jedoch zu höheren Herstellungskosten und zu Schwierigkeiten beim Einführen des zu verbindenden Rohres in die Rohrverbindung.

Da Verbund- oder Mehrschichtrohre beispielsweise häufig im Bereich der Sanitärtechnik, insbesondere bei Rohrleitungssystemen für Fußbodenheizungen und Unterputzrohrsystemen eingesetzt werden, sind eine hohe Zuverlässigkeit und eine lange Haltbarkeit der Verbindungen mit diesen Rohren wünschenswert. Um die Probleme konventioneller Verbindungen mit Verbund- oder Mehrschichtrohren zu umgehen sind im Stand der Technik verschiedene Ansätze verfolgt worden. So sind Fittings bekannt, deren Stützkörper mit Kunststoff umspritzt worden ist. Dies hat den Nachteil, dass die Herstellung solcher Fittings durch den zusätzlichen Umspritzungsprozess aufwändig und teuer ist. Weiterhin hält die Verbindung zwischen dem Metall des Fittings und der umspritzten Kunststoffschicht häufig nicht zuverlässig.

Eine weitere Alternative aus dem Stand der Technik ist die Verwendung vollständig aus Kunststoff gefertigter Fittings. Diese Fittings haben jedoch gegenüber aus Metall gefertigten Fittings den Nachteil, dass sie ein scharfkantiges Innenprofil aufweisen. So ist es beispielsweise bei T-Stückförmigen Fittings aus Metall vorteilhaft, das Innenprofil des Fittings an der Abzweigkante mit einem gewissen Radius abgerundet auszubilden, um den Druckverlust des geführten Mediums zu reduzieren. Dies ist bei vollständig aus Kunststoff gefertigten Fittings nicht oder nicht ohne eine aufwändige und kostenintensive Nachbearbeitung möglich.

Aus der US 2005/067833 ist ein Fitting bekannt, bei dem ein Grundkörper aus Metall und ein Stützkörper aus Kunststoff mittels einer mechanischen Rastverbindung miteinander befestigt sind, wobei die Abdichtung mittels eines O-Rings erfolgt.

Die US 3,612,584 offenbart eine Schraubverbindung zwischen einem aus Metall bestehenden Grundkörper und einem aus Kunststoff bestehenden Stützkörper, wobei das Gewinde in besonderer Weise ausgestaltet ist, um die Dichtwirkung zu erzielen.

Die US 3, 533, 649 offenbart ein Fitting nach dem Oberbegriff von Anspruch 1.

Der vorliegenden Erfindung liegt damit das technische Problem zu Grunde, ein Fitting zur Verfügung zu stellen, das eine zuverlässige Dichtheit bei der Verbindung mit einem Verbund- oder Mehrschichtrohr unter Vermeidung der oben genannten Nachteile gewährleistet.

Dieses technische Problem wird erfindungsgemäß durch einen Fitting mit den Merkmalen des Anspruchs 1 gelöst. Weitere vorteilhafte Ausgestaltungen sind in den Unteransprüchen angegeben.

Dadurch, dass der Stützkörper als ein vom Grundkörper separates Teil aus einem Kunststoff ausgebildet ist und der Grundkörper auf seiner Innenseite und der Stützkörper auf seiner Außenseite Mittel aufweisen, dass der Grundkörper an seiner Innenseite eine umlaufende Ausnehmung und der Stützkörper an seiner Außenseite einen umlaufenden Zahn aufweisen und dass im verbundenen Zustand der umlaufende Zahn des Stützkörpers und die umlaufende Ausnehmung des Grundkörpers miteinander dauerhaft dichtend verrastet sind, wird ein Fitting zur Verfügung gestellt, der die Stabilität und Haltbarkeit eines Metallfittings und die Dichtheit zwischen dem Stützkörper und einem verbundenen Mehrschicht- oder Verbundrohr eines Kunststofffittings miteinander verbindet.

Die Erfindung überwindet dadurch unter anderem das technische Vorurteil, dass die dichte Verbindung eines Kunststoffbauteils mit einem Metallbauteil nicht ohne weitere Hilfsmittel, wie beispielsweise weiterer Dichtmittel, insbesondere einem O-Ring, möglich ist.

Es hat sich gezeigt, dass die Verbindung eines Stützkörpers aus Kunststoff mit einem Verbund- oder Mehrschichtrohr eine wesentlich zuverlässigere Dichtheit und größere Haltbarkeit aufweist als die Verbindung eines Stützkörpers aus Metall mit einem solchen Rohr. Ein Metall zeigt üblicherweise eine wesentlich geringere Wärmeausdehnung als ein Kunststoff. So liegt beispielsweise für Raumtemperatur der Wärmeausdehnungskoeffizient α bei 16,5·10⁻⁶ K⁻¹ für das Metall Kupfer und bei 70·10⁻⁶ K⁻¹ für den Kunststoff Polystyrol. Es hat sich weiterhin gezeigt, dass ein Grundkörper aus Metall eine wesentlich größere Stabilität und Haltbarkeit als ein Grundkörper aus Kunststoff aufweist. In der Erfindung ist demnach erkannt worden, dass sich die Vorteile eines Stützkörpers aus einem Kunststoff mit den Vorteilen eines Grundkörpers aus einem Metall in der beschriebenen Art vorteilhaft kombinieren lassen. Die verschiedene Wärmeausdehnung des Metalls und des Kunststoffes wird weiterhin in der beschriebenen Erfindung zur Herstellung einer zuverlässigen und dichten Verbindung zwischen Stütz- und Grundkörper ausgenutzt. So ist gemäß der erfindungsgemäßen Anordnung der Mittel zur Verbindung von Stütz- und Grundkörper die Anordnung des Stützkörpers im Bereich der Verbindung im Grundkörper vorgesehen. Die Dichtheit der Verbindung ist auf diese Weise durch die stärke Ausdehnung des innenliegenden Kunststoffs auch bei Temperaturerhöhung gewährleistet.

Eine vorteilhafte Ausgestaltung des Fittings ist dadurch gegeben, dass das Material des Stützkörpers einen größeren Wärmeausdehnungskoeffizienten als das Material des Grundkörpers aufweist.

Da eine Temperaturerhöhung häufig auch mit einer Druckerhöhung des im Rohr geführten Mediums einhergeht, ist es häufig vorteilhaft, wenn die Verbindung zwischen dem Grundkörper und dem Stützkörper kraftschlüssig ist und die die kraftschlüssige Verbindung bewirkende Kraft bei erhöhter Temperatur zunimmt, damit die Dichtheit dieser Verbindung auch bei erhöhtem Druck gewährleistet ist. Die größere Wärmeausdehnung des im Bereich der Verbindung im Grundkörper liegenden Stützkörpers führt eben zu einer solchen Verstärkung der kraftschlüssigen Verbindung. Der Stützkörper ist dabei so bemessen, dass auch bei der geringst möglichen Betriebstemperatur die Dichtheit der Verbindung zwischen Grund- und Stützkörper gewährleistet ist.

Eine weitere vorteilhafte Ausgestaltung des Fittings ist dadurch gegeben, dass der Stützkörper aus einem wenig-kriechenden Kunststoff besteht.

Durch Temperaturänderungen oder Druckbeaufschlagung des Stützkörpers beim Verpressen des Fittings mit einem Rohr kann es zu Verformungen des Stützkörpers kommen. Für die Gewährleistung der Dichtheit der Verbindungen zwischen dem Rohr und dem Stützkörper sowie zwischen dem Stützkörper und dem Grundkörper kann der Stützkörper in vorteilhafter Weise aus einem wenig-kriechenden Kunststoff bestehen. Damit wird gewährleistet, dass der durch Druck verformte Kunststoff des Stützkörpers nicht dauerhaft in dem verformten Zustand verbleibt, sondern bei einer Druckentlastung wieder seine ursprüngliche Form einnimmt. Die Stabilität der Form des Stützkörpers führt dabei zu einer großen Haltbarkeit der Verbindung.

Eine weitere vorteilhafte Ausgestaltung des Fittings ist dadurch gegeben, dass der Stützkörper aus Polyphenylsulfon (PPSU), Polyvinylidenfluorid (PVDF) oder aus einem anderen für Trinkwasser zugelassenen Kunststoff besteht.

Die Verwendung eines solchen Kunststoffs hat den Vorteil, dass das Fitting in Verbindung mit Rohrleitungen, durch welche Trinkwasser geführt wird, eingesetzt werden kann. Für den Einsatz des Fittings in einem Heizungs- oder Kühlrohrleitungssystem besteht der Stützkörper des Fittings vorteilhaft aus einem temperatur- und hydrolysebeständigen Kunststoff.

Zur Gewährleistung der Dichtheit des gesamten Fittings ist eine dauerhaft dichte Verbindung zwischen Grund- und Stützkörper erforderlich. Durch ein Verrasten des Stützkörpers mit dem Grundkörper ist eine besonders haltbare und sichere Verbindung zwischen diesen beiden Teilen gegeben. Weiterhin kann das Fitting bei einer Rastverbindung auch erst direkt vor dem Einbau aus jeweils einem zunächst separaten Grundkörper und einem Stützkörper hergestellt werden. Dies bietet vor allem Verpackungs-technische Vorteile. Ein zusätzlicher Synergieeffekt wird bei der Verwendung eines Stützkörpers aus einem elastischen Kunststoff zusammen mit einer Rastverbindung erreicht, da der elastische Kunststoff sich an die Form der Rasten anpassen kann und sich so eine besonders innige formschlüssige Verbindung ergibt. Ein weiterer Vorteil einer verrasteten Verbindung besteht darin, dass der Einbau des Fittings als Verbinder einfach und sicher durchgeführt werden kann, da das erfindungsgemäße zweistückige Fitting durch die Verbindung der beiden Teile so einfach wie ein einstückiges Fitting gehandhabt werden kann.

Eine weitere vorteilhafte Ausgestaltung des Fittings ist dadurch gegeben, dass der Stützkörper mit Übermaß mit dem Grundkörper verbunden ist.

Durch die Verbindung eines Stützkörpers mit Übermaß mit dem Grundkörper ergibt sich durch das Bestreben des Kunststoffs des Stützkörpers, sich auf seine ursprüngliche Größe auszudehnen, eine Kraft auf die Innenseite des Grundkörpers im Bereich der Verbindung mit dem Stützkörper. Durch diese im Wesentlichen radial nach außen wirkende Kraft wird eine starke kraftschlüssige Verbindung zwischen Stütz- und Grundkörper erreicht. Diese Verbindung ist besonders bei Temperaturerniedrigungen vorteilhaft, da die Tendenz des Stützkörpers, seine ursprünglich größere Form einzunehmen, dem durch die Temperaturerniedrigung verursachten Zusammenziehen des Stützkörpers entgegenwirkt. Insbesondere bei plötzlichen Temperaturänderungen und damit häufig auftretendem ungleich schnellem Ausdehnen oder Zusammenziehen des Stützkörper und des Grundkörpers ist die Dichtheit der Verbindung gewährleistet.

Eine weitere vorteilhafte Ausgestaltung des Fittings ist dadurch gegeben, dass der Stützkörper aus einem elastischen Kunststoff besteht.

Durch die Verwendung eines elastischen Kunststoffs für den Stützkörper wird erreicht, dass sich der Kunststoff des Stützkörpers an die innere Fläche des Grundkörpers im Bereich der Verbindung von Stütz- und Grundkörper anpassen kann. Dies führt neben der kraftschlüssigen Verbindung zu einer innigen formschlüssige Verbindung zwischen Stütz- und Grundkörper und somit zu einer weiteren Verstärkung und erhöhten Zuverlässigkeit dieser Verbindung. Weiterhin erleichtert ein elastischer Kunststoff das Einführen eines Stützkörpers mit Übermaß in den Grundkörper.

Eine weitere vorteilhafte Ausgestaltung des Fittings ist dadurch gegeben, dass der Stützkörper aus einem Kunststoff ausgebildet ist, aus dem zumindest teilweise auch das zu verbindende Rohr ausgebildet ist.

Durch die Verwendung des Kunststoffes für den Stützkörper, aus dem teilweise auch das mit dem Stützkörper zu verbindenden Rohr ausgebildet ist, wird eine Angleichung der Wärmeausdehnung zwischen dem Stützkörper und dem zu verbindenden Rohr erreicht. Der Stützkörper und das Rohr dehnen sich dadurch bei Temperaturänderung im Wesentlichen in gleichem Maße aus, so dass die Verbindung zwischen dem Stützkörper und dem Rohr durch die Temperaturänderung im Wesentlichen keine Änderungen erfährt. Einerseits werden so Undichtigkeiten durch Leckbildung vermieden, andererseits werden Materialspannungen im Stützkörper oder im Rohr, die zu einer schnelleren Materialermüdung und somit mittel- oder langfristig zu einer Undichtigkeit führen könnten, reduziert oder sogar unterbunden. Mit einer vergleichbaren Wärmeausdehnung des Rohres und des Stützkörpers wird weiterhin erreicht, dass die Verbindung zwischen Stützkörper und Rohr auch bei einer Temperaturerniedrigung dicht bleibt.

Das technische Problem wird weiterhin auch durch ein System mit den Merkmalen des Anspruchs 4 gelöst.

Dadurch dass der Fitting mit dem Verbundrohr oder dem Mehrschichtrohr verbunden ist und die Hülse mit dem Fitting und dem Verbundrohr oder dem Mehrschichtrohr verpresst ist wird die Zuverlässigkeit und Haltbarkeit des erfindungsgemäßen Fittings mit der Stabilität einer verpressten Verbindung kombiniert. Die Verpressung der Hülse mit dem Fitting und dem Verbund- oder dem Mehrschichtrohr gewährleistet dabei einen sicheren Halt des Rohres auf dem Stützkörper und führt weiterhin zu einer starken kraftschlüssigen Verbindung zwischen dem Stützkörper und dem Verbund- oder Mehrschichtrohr. Dieses System ist besonders vorteilhaft bei der Verwendung eines Stützkörpers aus einem elastischen Kunststoff, da sich der Kunststoff des Stützkörpers durch den Druck des Verpressens an die Form des Grundkörpers im Verbindungsbereich anpasst und so eine innige formschlüssige Verbindung zwischen dem Stützkörper und dem Verbund- oder Mehrschichtrohr ausbildet.

Das technische Problem wird weiterhin durch ein System mit den Merkmalen des Anspruchs 5 gelöst.

Es hat sich gezeigt, dass durch ein Verschweißen eines Kunststoffrohres mit einem Stützkörper aus Kunststoff eine besonders zuverlässige Verbindung zwischen dem Stützkörper und dem Kunststoffrohr erreicht werden kann. Im Gegensatz zu Systemen mit einem vollständig aus einem Metall hergestellten Fitting ermöglicht das System mit dem erfindungsgemäßen Fitting ein solches Verschweißen, da der Stützkörper aus einem Kunststoff besteht. Die Hülse dient dabei der zusätzlichen Fixierung des Fittings mit dem Rohr.

Das technische Problem wird weiterhin auch durch die Verwendung eines erfindungsgemäßen Fittings mit den Merkmalen des Anspruchs 7, sowie durch die Verwendung eines erfindungsgemäßen Fittings mit den Merkmalen des Anspruchs 8 gelöst. Eine vorteilhafte Ausgestaltung der Verwendung des Fittings ist dadurch gegeben, dass das Kunststoffrohr mit dem Stützkörper mindestens teilweise stoffschlüssig verbunden wird. Diese erfindungsgemäßen Verwendungen weisen dabei ebenso die oben genannten Vorteile auf.

Weitere Merkmale und Vorteile der vorliegenden Erfindung werden in der Beschreibung zweier Ausführungsbeispiele näher erläutert, wobei auf die beigefügten Zeichnungen Bezug genommen wird. In der Zeichnung zeigen
- Fig. 1a: ein Ausführungsbeispiel eines zweiteiligen Fittings gemäß der vorliegenden Erfindung, ein Rohr sowie Ausführungsbeispiele eines Kraftübertragungselements und einer Hülse in einer Querschnittsansicht,
- Fig. 1b: das zweiteiliges Fitting gemäß der vorliegenden Erfindung, das Rohr sowie die Ausführungsbeispiele des Kraftübertragungselements und der Hülse in einer Querschnittsansicht, wobei das zweiteilige Fitting zusammengesetzt ist,
- Fig. 2: das zweiteilige Fitting gemäß der vorliegenden Erfindung, das Rohr sowie die Ausführungsbeispiele des Kraftübertragungselements und der Hülse in einer Querschnittsansicht, wobei das Kraftübertragungselement an dem Fitting positioniert ist,
- Fig. 3: ein System gemäß der vorliegenden Erfindung mit dem Rohr in einer Querschnittsansicht, wobei die Hülse an dem Kraftübertragungselement in einer Zwischenposition positioniert ist,
- Fig. 4: das Fitting gemäß der vorliegenden Erfindung, das Rohr sowie die Ausführungsbeispiele des Kraftübertragungselements und der Hülse in einer Querschnittsansicht, wobei das Rohr zwischen dem Fitting und dem Kraftübertragungselement eingeführt ist und wobei zunächst eine axiale Verpressung ausgeführt wird,
- Fig. 5a-b: das Fitting gemäß der vorliegenden Erfindung, das Rohr sowie die Ausführungsbeispiele des Kraftübertragungselements und der Hülse in einer Querschnittsansicht, bevor nach der Durchführung der axialen Verpressung ein radial einwärtiger Pressvorgang vorgenommen wird,
- Fig. 6a-b: das Fitting gemäß der vorliegenden Erfindung, das Rohr sowie die Ausführungsbeispiele des Kraftübertragungselements und der Hülse in einer Querschnittsansicht nach Beendigung des radial einwärtigen Pressvorgangs,
- Fig. 7: ein Ausführungsbeispiel eines zweiteiligen Fittings im Querschnitt mit einer aufgesteckten Hülse, sowie ein separates Verbundrohr und
- Fig. 8: das Ausführungsbeispiel der zweiteiligen Fittings nach Fig. 7 im Querschnitt mit der Hülse nach dem Einführen des Verbundrohres und nach dem Verpressen der Hülse mit dem Verbundrohr und dem Fitting.

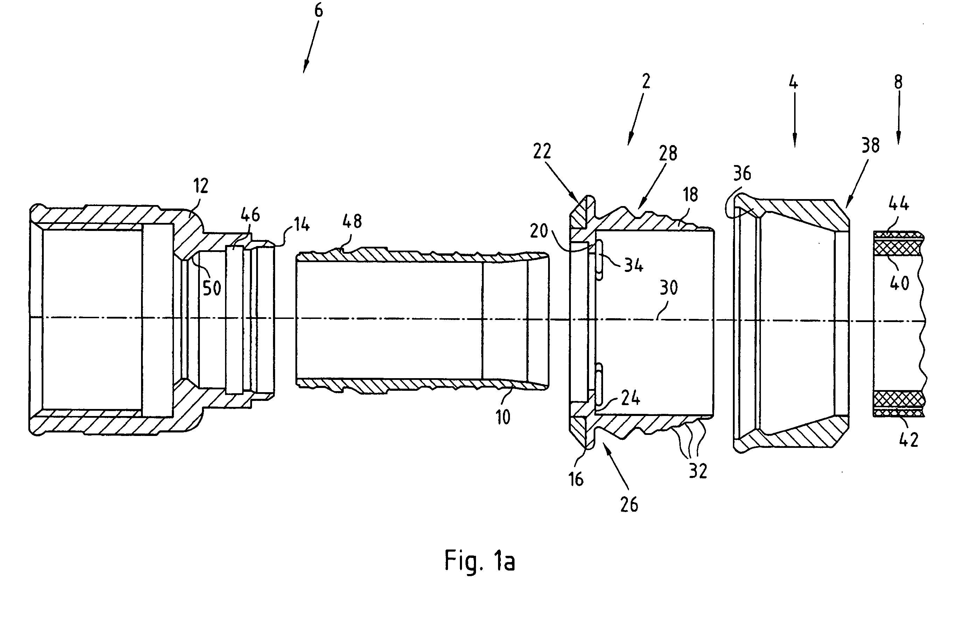

Im Folgenden wird unter Bezugnahme auf die Fig. 1a bis 6b beispielhaft ein System zur Herstellung einer unlösbaren Werkstückverbindung gemäß der vorliegenden Erfindung erläutert, in welchem ein Ausführungsbeispiel eines Kraftübertragungselements 2 sowie einer Hülse 4 Verwendung finden.

Fig. 1a zeigt in einer Querschnittsansicht vier Werkstücke: ein Fitting 6, ein Kraftübertragungselement 2, eine Hülse 4 und ein Rohr 8.

Das Fitting 6 weist einen ein Profil aufweisenden Stützkörper 10 aus einem Kunststoff, beispielsweise PPSU, sowie einen Grundkörper 12 aus einem Metall auf. Der Stützkörper 10 und der Grundkörper 12 sind in Fig. 1a noch voneinander getrennt. Das Fitting 6 weist am Grundkörper 12 eine in axialer Richtung gewandte Stoßfläche 14 auf. Das Profil des Stützkörpers 10 besteht in diesem speziellen Beispiel aus fünf ringförmig umlaufenden Nuten, welche durch vier dazwischen angeordnete, ringförmig umlaufende Trennstege voneinander abgegrenzt sind. Die Innenumfangsfläche des Stützkörpers 10 ist im Wesentlichen zylinderförmig ausgebildet, wobei jedoch die Stützkörperwand an dem dem Grundkörper 12 distalen Ende des Stützkörpers 10 radial auswärts leicht angeschrägt ist, um den Querschnittsübergang stetig zu gestalten.

Dem Fitting 6 in Fig. 1a vorgeordnet ist ein Kraftübertragungselement 2. Das Kraftübertragungselement 2 weist in diesem speziellen Beispiel einen dem Fitting 6 zugewandten Flanschabschnitt 16 und einen Übertragungsabschnitt 18 auf. An der Innenumfangsfläche weist der Flanschabschnitt 16 in diesem Ausführungsbeispiel ein radial einwärts ausgreifendes Anlageelement 20 auf. In dem in Fig. 1a gezeigten Ausführungsbeispiel des Kraftübertragungselements 2 ist an der Außenumfangsfläche des Flanschabschnitts 16 an der Stirnseite darüber hinaus eine Fase 22 angeordnet, welche als Interaktionsfläche mit einem Presswerkzeug (nicht gezeigt) dienen kann. Ferner weist der Flanschabschnitt 16 an seinem radial einwärts ausgreifenden Bereich eine in axialer Richtung gewandte Stoßfläche 24 auf, an welcher die Stirnfläche eines Rohrs 8 in Anlage kommen kann. Die Innenumfangsfläche des Flanschabschnitts 16 kann als Mehrkant (nicht dargestellt) ausgebildet sein. Auf diese Weise kann in der Wechselwirkung mit der der Innenumfangsfläche des Flanschabschnitts 16 gegenüberliegenden Außenumfangsfläche des Grundkörpers 12, an welchem das Kraftübertragungselement 2 zu positionieren ist, eine zusätzliche Sicherung gegen unerwünschte Drehbewegungen des Kraftübertragungselements 2 relativ zu dem Fitting 6 erreicht werden.

Der Übertragungsabschnitt 18 des Kraftübertragungselements 2 weist eine sich von dem dem Flanschabschnitt 16 proximalen Ende bis zu dem dem Flanschabschnitt 16 distalen Ende wenigstens abschnittsweise verjüngende Wanddicke auf. Dies ist so zu verstehen, dass die Verjüngung, also die Wandstärkenabnahme zwar durch Formelemente wie einer in diesem Beispiel an dem dem Flanschabschnitt 16 proximalen Ende des Übertragungsabschnitts 18 angeordneten Rastvertiefung 26, welche ringförmig umlaufend ist, sowie einer in diesem Beispiel zwischen der Rastvertiefung 26 und dem dem Flanschabschnitt 16 distalen Ende angeordneten ringförmig umlaufenden Haltevertiefung 28 modifiziert wird, aber in der Tendenz bestehen bleibt. Die Verjüngung bzw. Wandstärkenabnahme kann somit durch eine gedachte Linie (nicht gezeigt), welche durch die am weitesten radial auswärts liegenden Abschnitte des Übertragungsabschnitts 18 verläuft, beispielsweise in der Art einer Einhüllenden, repräsentiert werden. In diesem speziellen Ausführungsbeispiel erfolgt die Wandstärkenabnahme wenigstens abschnittsweise mittels Ausbildung einer Kegelsegmentfläche, welche unter einem Winkel von etwa 15° gegen die Mittelachse 30 des Kraftübertragungselements 2 geneigt ist. Es ist jedoch auch möglich, einen Winkel bis zu 75° zu wählen.

An der Außenumfangsfläche des Übertragungsabschnitts 18 sind in diesem Beispiel zwischen der Haltevertiefung 28 und dem distalen Ende drei Vertiefungen 32 zur Verringerung der Kontaktfläche angeordnet. Die Vertiefungen 32 nehmen in diesem Beispiel die Form von ringförmig umlaufenden Rillen an, können aber beispielsweise auch als Riffelung ausgebildet werden.

In dem Bereich des dem Flanschabschnitt 16 proximalen Endes des Übertragungsabschnitts 18 des Kraftübertragungselements 2 sind in diesem Beispiel zwei Öffnungen 34 angeordnet, welche eine im Wesentlichen in Umfangsrichtung verlaufende Erstreckung aufweisen. Die Öffnungen 34 ermöglichen einem Installateur eine visuelle Kontrolle der Position der Werkstücke 2, 4, 6, 8 vor und gegebenenfalls nach dem Pressvorgang. Die Öffnungen 34 können natürlich auch eine andere Form aufweisen bzw. an einer anderen Stelle angeordnet sein. Auch die Anzahl der Öffnungen 34 kann grundsätzlich frei gewählt werden.

Als Drehsicherung kann eine Ausbildung der Innenumfangsfläche des Übertragungsabschnitts 18 als Mehrkant (nicht gezeigt) vorgesehen sein.

Weiterhin zeigt Fig. 1a eine Hülse 4, deren erstes Ende im Querschnitt, also in der Querschnittsansicht eine bestimmte Dicke aufweist, und deren zweites Ende gegenüber dem ersten Ende im Querschnitt verjüngt ist. Der Außendurchmesser der Hülse 4 ist über die Außenumfangsfläche in axialer Richtung wenigstens abschnittsweise konstant. Dies bedeutet insbesondere, dass Formmerkmale mit geringer räumlicher Abmessung vorgesehen sein können, welche die Konstanz des Außendurchmessers modifizieren. In diesem speziellen Beispiel erfolgt eine Modifikation dadurch, dass das verjüngte Ende der Hülse 4 radial auswärts leicht abgewinkelt ist. Es ist aber auch möglich, die Hülse 4 mit einem über die gesamte axiale Erstreckung der Hülse 4 konstanten Außendurchmesser auszubilden. Ferner ist an der Innenumfangsfläche des verjüngten Endes ein radial einwärts ausgreifender Rastvorsprung 36 angeordnet, welcher in diesem Beispiel ringförmig umlaufend ist. Die Innenumfangsfläche der Hülse 4 weist wenigstens abschnittsweise Hohlkegelsegmentform auf. An der Außenumfangsfläche der Hülse 4 ist an dem nicht verjüngten Ende eine Fase 38 angeordnet, an welcher ein Presswerkzeug (nicht gezeigt) ansetzen kann.

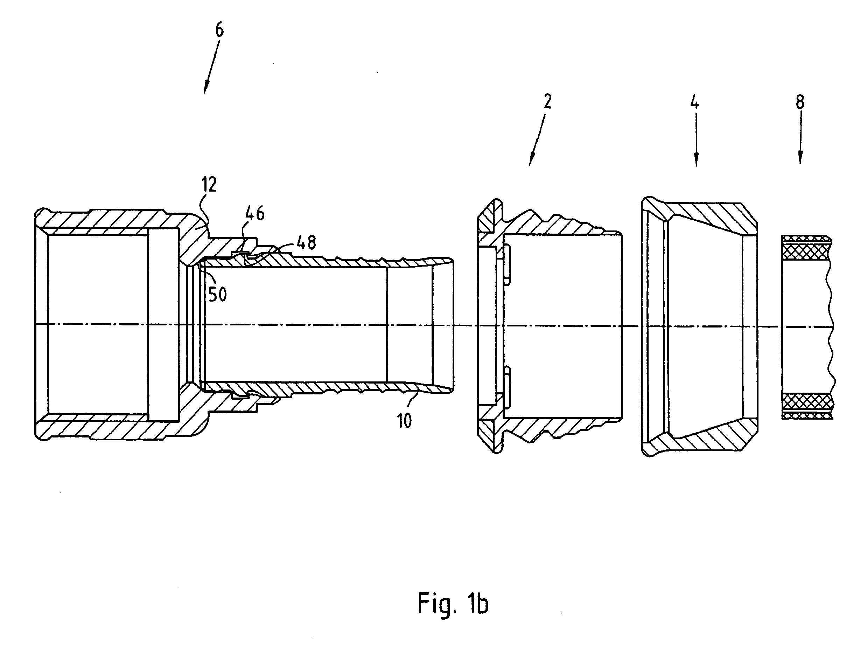

Das letzte Werkstück in der in Fig. 1a dargestellten Aufstellung ist in diesem Ausführungsbeispiel ein Verbundrohr 8, welches drei Schichten 40, 42, 44 umfasst. Zum Beispiel kann die innere Schicht 40 aus einem vernetzten Polyethylen (PEX), die mittlere Schicht 42 aus einem Metall wie Aluminium und die äußere Schicht 44 aus einem insbesondere mechanischen Beanspruchungen widerstehenden oder auch ästhetischen Gesichtspunkten genügenden Kunststoff bestehen. Das in Fig. 1 gezeigte Verbundrohr 8 ist jedoch nur als Beispiel zu verstehen. Selbstverständlich könnte die in Fig. 1 gezeigte Aufstellung auch ein einschichtiges Rohr, beispielsweise aus einem Kunststoff umfassen. Auch der Querschnitt des Rohrs 8 ist grundsätzlich nicht beschränkt. Entscheidend ist, dass die relevanten Durchmesser der Werkstücke 2, 4, 6, 8, also der Außendurchmesser des Stützkörpers 10 des Fittings 6 und der Innendurchmesser des Rohrs 8 bzw. der Außendurchmesser des Rohrs 8 und der Innendurchmesser des Übertragungsabschnitts 18 des Kraftübertragungselements 2 füreinander geeignet bzw. aufeinander angepasst sind.

Die in Fig. 1b gezeigte Aufstellung unterscheidet sich von der in Fig. 1a dargestellten dadurch, dass der Stützkörper 10 in den Grundkörper 12 eingesteckt ist, so dass das Fitting 6 nunmehr einstückig vorliegt. Die feste Fixierung des Stützkörpers 10 im Grundkörper 12 wird dabei durch eine Rastvorrichtung erreicht. So weist der Grundkörper 12 an seiner Innenseite eine umlaufende Ausnehmung 46 und der Stützkörper 10 an seiner Außenseite einen umlaufenden Zahn 48 auf. Der Zahn 48 ist auf der dem Grundkörper 12 proximalen Seite abgeschrägt, um das Einführen des Stützkörpers 10 in den Grundkörper 12 zu vereinfachen. Der Grundkörper 12 weist an seiner Innenseite außerdem eine umlaufende Anlagefläche 50 auf. In Fig. 1b ist der Stützkörper 10 so in den Grundkörper 12 eingesteckt, dass er mit der Anlagefläche 50 des Grundkörpers 12 in Anlage gebracht ist. Der umlaufende Zahn 48 des Stützkörpers 10 ist bei dieser Anordnung in die umlaufende Ausnehmung 46 des Grundkörpers 12 eingerastet, so dass der Stützkörper 10 fest und sicher mit dem Grundkörper 12 verbunden ist.

Der Stützkörper 10 kann in Fig. 1b optional mit Übermaß in den Grundkörper 12 eingepresst sein, so dass an der radialen Anlagefläche zwischen dem Stützkörper 10 und dem Grundkörper 12 eine starke kraftschlüssige Verbindung vorliegt.

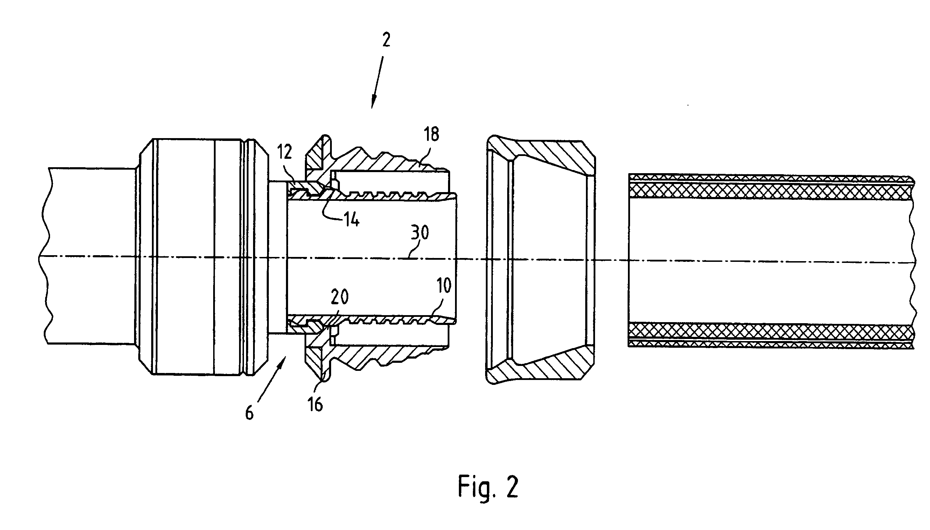

Die in Fig. 2 gezeigte Aufstellung unterscheidet sich von der in Fig. 1b dargestellten dadurch, dass das Kraftübertragungselement 2 auf das Fitting 6 aufgesteckt ist bzw. dass das Fitting 6 in das Kraftübertragungselement 2 eingreift. Der Flanschabschnitt 16 ist in diesem Beispiel über eine Presspassung, also einer reibschlüssigen Anlage an dem Fittinggrundkörper 12 fixiert und hemmt dadurch eine axiale Bewegung des Kraftübertragungselements 2 und des Fittings 6 zueinander. Die in axialer Richtung gewandte Stoßfläche 14 des Fittings 6 steht in diesem Beispiel mit dem an dem Flanschabschnitt 16 angeordneten Anlageelement 20 in Anlage. In dem in Fig. 2 gezeigten Ausführungsbeispiel wird der Fittinggrundkörper 12 im Wesentlichen von dem Flanschabschnitt 16 und der Stützkörper 10 im Wesentlichen von dem Übertragungsabschnitt 18 umgriffen, wobei das distale Ende des Stützkörpers 10 übertragungsabschnittseitig aus dem Kraftübertragungselement 2 herausragt. Diese Ausgestaltung ist jedoch nicht zwingend. Ebenso ist denkbar, dass das distale Ende des Stützkörpers 10 und das distale Ende des Übertragungsabschnitts 18 etwa in der gleichen Perpendikularebene zur Mittelachse 30 zu liegen kommen, oder dass das distale Ende des Übertragungsabschnitts 18 den Stützkörper 10 sogar überragt. Es können also verschiedene Ausgestaltungen gewählt werden.

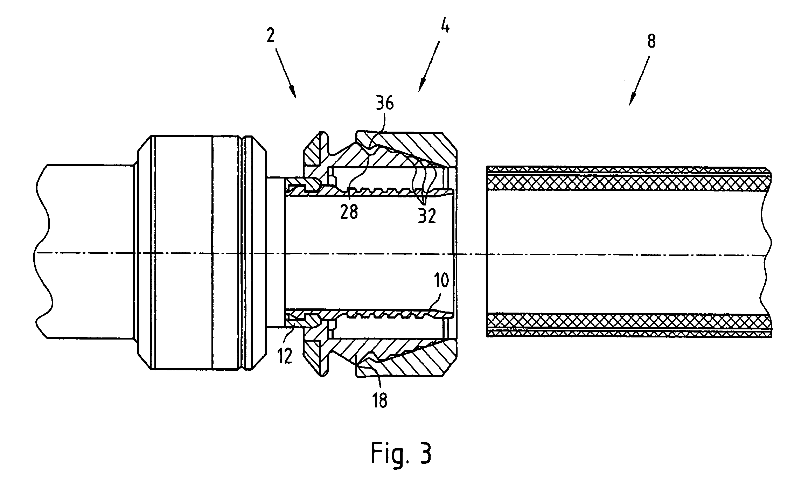

Die in Fig. 3 gezeigte erfindungsgemäße Anordnung unterscheidet sich von der in Fig. 2 dargestellten dadurch, dass die Hülse 4 übertragungsabschnittseitig auf das Kraftübertragungselement 2 aufgesteckt ist. Der an dem verjüngten Ende der Hülse 4 angeordnete Rastvorsprung 36 greift in die an der Außenumfangsfläche des Übertragungsabschnitts 18 angeordnete Haltevertiefung 28 ein, so dass in einer Zwischenposition - bevor die eigentlichen Pressvorgänge eingeleitet werden - einer Bewegung der Hülse 4 von dem Kraftübertragungselement 2 herunter vorgebeugt wird. Die anderen Abschnitte der Innenumfangsfläche der Hülse 4 und der zwischen der Haltevertiefung 28 und dem distalen Ende gelegene Abschnitt des Übertragungsabschnitts 18 sind vorzugsweise aufeinander angepasst und sind zumindest abschnittsweise - abgesehen von den Vertiefungen 32 zur Verringerung der Kontaktfläche - in einer reibschlüssigen Anlage.

Auf der linken Seite der Fig. 3 ist somit im Schnitt ein erfindungsgemäßes Systems zur Herstellung einer unlösbaren Werkstückverbindung dargestellt, wie sie ein Installateur im Handel erwerben kann, und welche nur noch um ein zu verpressendes Rohr 8 zu ergänzen ist, um die Verpressung vornehmen zu können.

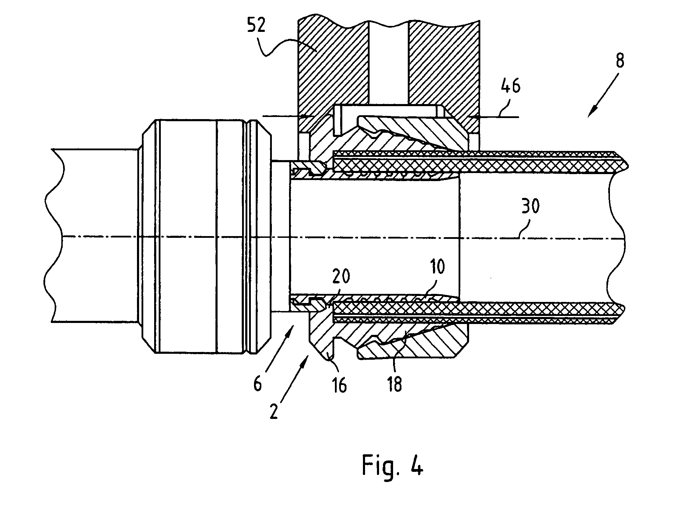

Fig. 4 zeigt die aus den Fig. 1a bis 3 bekannte Aufstellung, bei der das Rohr 8 in den Hohlraum zwischen dem Stützkörper 10 des Fittings 6 und dem Übertragungsabschnitt 18 des Kraftübertragungselements 2 eingeführt ist. Die Stirnfläche des Rohrs 8 ist bis zum Anschlag an den Flanschabschnitt 16 bzw. das an dem Flanschabschnitt 16 angeordnete Anlageelement 20 herangeschoben. Durch die am Übertragungsabschnitt 18 angeordneten Öffnungen 34 (nicht sichtbar) kann der Installateur in der in Fig. 4 gezeigten Aufstellung die ordnungsgemäße Position der Werkstücke 2, 4, 6, 8 zueinander kontrollieren.

Um die Herstellung der unlösbaren Werkstückverbindung einzuleiten, können nun an den durch die in Fig. 4 dargestellten, parallel zur Mittelachse 30 verlaufenden Pfeile 46, beispielsweise unter Einsatz eines Presswerkzeugs 52 (hier einseitig dargestellt), die axialen Presskräfte ausgeübt werden.

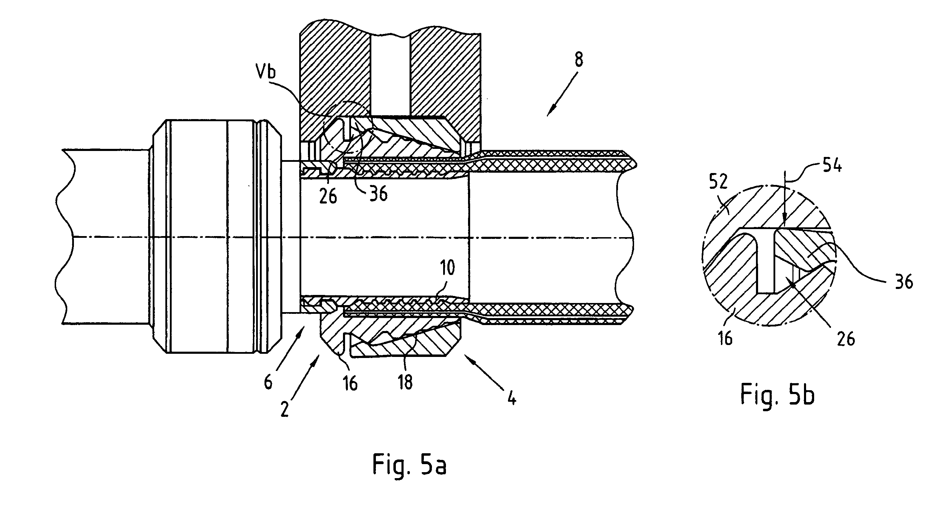

Das Ergebnis des axialen Pressvorgangs ist in Fig. 5a gezeigt. Durch die Ausübung der Presskräfte wird die Hülse 4 über den Übertragungsabschnitt 18 in axialer Richtung auf den Flanschabschnitt 16 zu bewegt. Durch die Neigung des Abschnitts der Innenumfangsfläche der Hülse 4 und der korrespondierenden Abschnitte der Außenumfangsfläche des Übertragungsabschnitts 18 wird die in diesem speziellen Ausführungsbeispiel in axialer Richtung ausgeübte Dynamik der Pressbewegung zumindest teilweise in radial einwärtig wirkende Presskräfte umgelenkt. Der Übertragungsabschnitt 18 überträgt die Presskräfte auf das Rohr 8, welches radial einwärts so umgeformt wird, dass die durch die Trennstege separierten Nuten am Stützkörper 10 des Fittings 6 das verdrängte Material des Rohrs 8 aufnehmen, und somit ein Kraft- und Formschluss entstehen kann, welcher die Dichtheit der unlösbaren Werkstückverbindung gewährleistet. In der vorläufigen Endposition nach dem axialen Pressvorgang liegt der Rastvorsprung 36 der Hülse 4 der Rastvertiefung 26 des Übertragungsabschnitts 18 gegenüber, wobei jedoch ein Abschnitt des Rastvorsprungs 36 mit einer Wand der Rastvertiefung 26 so in Kontakt stehen kann, dass eine axiale Bewegung der Hülse 4 nach dem axialen Pressvorgang von dem Kraftübertragungselement 2 herunter gehemmt ist.

Wie in der Vergrößerung der Fig. 5b gezeigt ragt das verjüngte Ende der Hülse 4 nach dem axialen Pressvorgang leicht über die von der Außenumfangsfläche des Flanschabschnitts 16 definierte Ebene radial auswärts leicht hervor und bietet somit einem Presswerkzeug 52 einen günstigen Ansatzpunkt für eine radial einwärtige Pressbewegung (Pfeil 54). Somit schließt sich dem axialen Pressvorgang ein radial einwärtiger Pressvorgang an, wodurch ein Abschnitt der Hülse 4, in diesem Beispiel das verjüngte Ende der Hülse 4, an dessen Innenumfangsfläche der Rastvorsprung 36 angeordnet ist, in die Rastvertiefung 26 eingeformt wird und somit eine stabile Verrastung der Hülse 4 mit dem Kraftübertragungselement 2 bewirkt. Dadurch kann dem Umstand entgegen gewirkt werden, dass sich die Hülse 4 von dem Kraftübertragungselement 2, beispielsweise auf Grund von durch Temperaturänderungen ausgelöste Materialausdehnungen bzw. -kontraktionen wieder löst, was Undichtigkeiten zur Folge haben könnte.

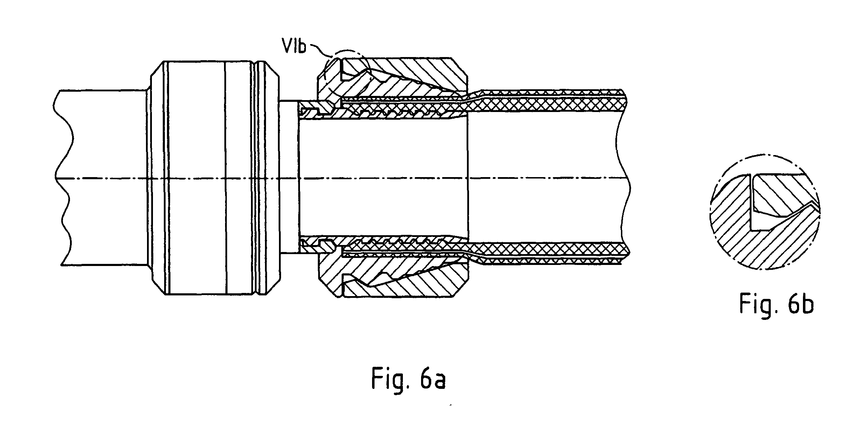

Fig. 6a zeigt noch einmal die vier Werkstücke 2, 4, 6, 8, nach dem sowohl der axiale als auch der radial einwärtige Pressvorgang abgeschlossen und die unlösbare Werkstückverbindung damit hergestellt sind. Wie in der Vergrößerung der Fig. 6b zu sehen, ist das abgewinkelte Ende der Hülse 4 während des radial einwärtigen Pressvorgangs mit der Außenumfangsfläche des Flanschabschnitts 16 in eine weitgehend fluchtende Ausrichtung geformt. Auf diese Weise kann die unlösbare Werkstückverbindung sehr kompakt ausgestaltet werden.

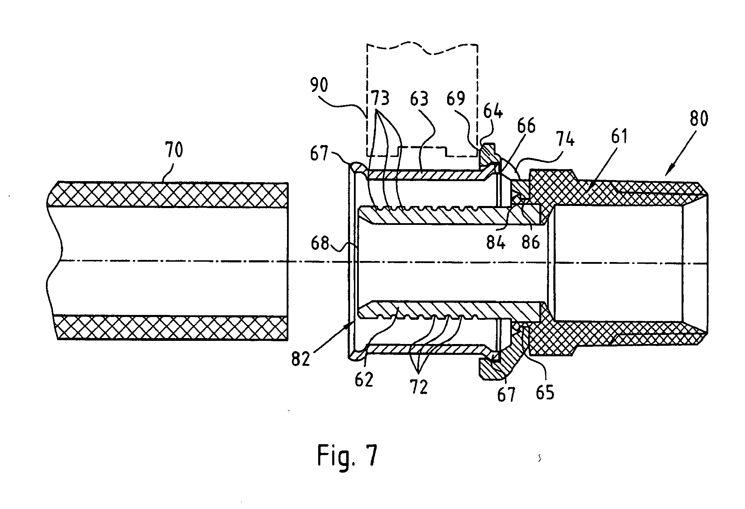

Fig. 7 zeigt ein Ausführungsbeispiel eines Systems mit einem zweiten Ausführungsbeispiel eines Fittings. Das Fitting 61 ist zweiteilig ausgebildet mit einem Grundkörper 80 aus einem Metall und einem zylindrischen Stützkörper 62 aus einem Kunststoff. Der Grundkörper 80 weist an seiner Innenseite Mittel 84 auf, die geeignet sind, den Stützkörper 82 mit dem Grundkörper 80 dicht und dauerhaft zu verbinden. Der Stützkörper 82 weist entsprechende Mittel 86 an seiner Außenseite auf. Die Mittel 84, 86 können beispielsweise als Gewinde, Rastvorrichtung oder als Klebefläche ausgebildet sein. An dem Fitting 61 ist eine aus Metall gefertigte Hülse 63 über einen Haltering 64 in axialer Richtung festgelegt. Der Haltering 64 ist aus Kunststoff gefertigt und in eine Rastnut 65 des Fittings 61 eingeschnappt. Weiterhin ist der Haltering 64 selbst mit einer Rastnut 66 versehen, in die ein an einem stirnseitigen Ende der Hülse 63 aufgeweiteter Ringabschnitt 67 eingeschnappt ist. Die Hülse 63 ragt über das im Verbindungsbereich liegende freie Ende 68 des Fittings 61 hinaus und ist in diesem Bereich ebenfalls mit einem aufgeweiteten Ringabschnitt 67 versehen und insoweit symmetrisch gestaltet.

Der Haltering 64 ist mit einem Ringflansch 69 ausgestattet. Mit dem Bezugszeichen 70 ist ein Kunststoffrohr bezeichnet, welches mit dem Fitting 61 zu verbinden ist. Am Stützkörper 62 sind mehrere umlaufende Nuten 72 bzw. 73 vorgesehen, wobei die mit dem Bezugszeichen 72 versehenen Nuten sägezahnartig ausgebildet sind und die mit dem Bezugszeichen 73 bezeichneten Nuten eine abgerundete Querschnittsform aufweisen. Über die sägezahnartigen Nuten können beträchtliche Zugkräfte aufgenommen werden, während die abgerundeten Nuten 73 eine einwandfreie Abdichtung zwischen dem Kunststoffrohr 70 und dem Fitting 61 bewirkten. Der aus Kunststoff gefertigte Haltering 64 ist in seinem Umfangsbereich mit mindestens einem radial verlaufenden Durchbruch 74 versehen, der in dem Bereich vorgesehen ist, in dem das Kunststoffrohr 70 am Fitting 61 anliegt. Durch diesen radialen Durchbruch, von dem auch mehrere am Umfang des Halteringes 64 vorgesehen sein können, ist diese exakte Lage des Kunststoffrohres vor Herstellung der Pressverbindung leicht zu kontrollieren. Die besagten Teile sind vor der Montage dargestellt.

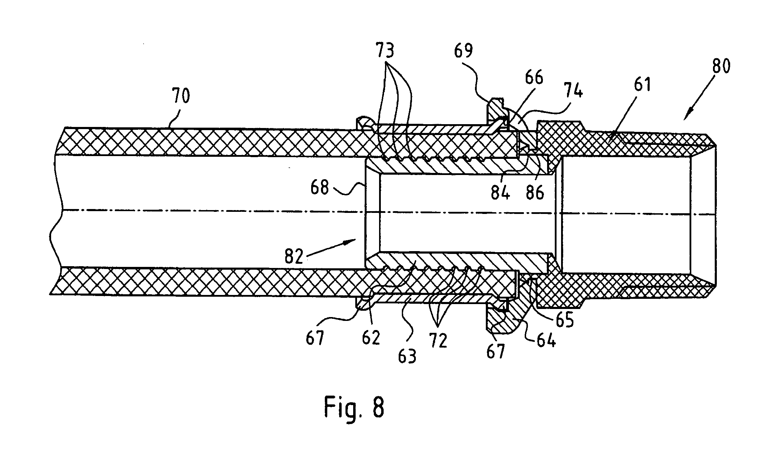

Fig. 8 zeigt das System aus Fig. 7 nach dem Einführen eines Mehrschicht- oder Verbundrohres 70 in den Bereich zwischen dem Stützkörper 82 und der Hülse 63. Durch ein in Fig. 7 durch strichpunktierte Linien andeutungsweise gezeigtes Presswerkzeug 90, welches einerseits am Ringflansch 69 des Halterings 64 und andererseits an dem im freien Endbereich der Hülse 63 vorgesehenen Ringabschnitt 67 geführt ist, wird zur Herstellung der Verbindung die Hülse 63 auf das Mehrschicht- oder Verbundrohr 70 aufgepresst.

Bei dem in Fig. 7 und Fig. 8 gezeigten Rohr 70 kann es sich alternativ auch um ein Kunststoffrohr handeln, wobei das Kunststoffrohr 70 mit dem Stützkörper 82 in Fig. 8 dann optional stoffschlüssig verbunden sein kann.

## Patentansprüche

1. Fitting (6) zum dichten Verbinden an ein Rohrende eines einen Kunststoff aufweisenden Rohres
- mit einem Grundkörper (12) und
- mit einem Stützkörper (10),
- wobei der Grundkörper (12) aus einem Metall besteht,
- wobei der Stützkörper (10) als ein vom Grundkörper (12) separates Teil aus einem Kunststoff ausgebildet ist und
- wobei der Grundkörper (12) auf seiner Innenseite und der Stützkörper (10) auf seiner Außenseite Mittel (46, 48) zum Verbinden aufweisen,
**dadurch gekennzeichnet,**
- **dass** der Grundkörper (12) an seiner Innenseite eine umlaufende Ausnehmung (46) und der Stützkörper (10) an seiner Außenseite einen umlaufenden Zahn (48) aufweisen und
- **dass** im verbundenen Zustand der umlaufende Zahn (48) des Stützkörpers (10) und die umlaufende Ausnehmung (46) des Grundkörpers (12) miteinander dauerhaft dichtend verrastet sind.

2. Fitting nach Anspruch 1,
**dadurch gekennzeichnet,**
**dass** das Material des Stützkörpers (10) einen größeren Wärmeausdehnungskoeffizienten als das Material des Grundkörpers (12) aufweist.

3. Fitting nach Anspruch 1 oder 2,
**dadurch gekennzeichnet,**
**dass** der Stützkörper (10) mit Übermaß mit dem Grundkörper (12) verbunden ist.

4. System,
- mit einem Fitting (6) nach einem der Ansprüche 1 bis 3,
- mit einem Verbund- oder einem Mehrschichtrohr (8),
- mit einer Hülse (4),
**dadurch gekennzeichnet,**
- **dass** der Fitting (6) mit dem Verbund- oder dem Mehrschichtrohr (8) verbunden ist und
- **dass** die Hülse (4) mit dem Fitting (6) und dem Verbund- oder dem Mehrschichtrohr (8) verpresst ist.

5. System,
- mit einem Fitting (6) nach einem der Ansprüche 1 bis 3,
- mit einem Kunststoffrohr (8),
- mit einer Hülse (4)
**dadurch gekennzeichnet,**
- **dass** das Kunststoffrohr (8) mit dem Stützkörper (10) des Fittings (6) stoffschlüssig verbunden ist und
- **dass** die Hülse (4) mit dem Fitting (6) und dem Kunststoffrohr (8) verpresst ist.

6. System nach Anspruch 4 oder 5
**dadurch gekennzeichnet,**
**dass** der Stützkörper (10) aus einem Kunststoff auch das zu ausgebildet ist, aus dem zumindest teilweise auch das zu verbindende Rohr (8) ausgebildet ist.

7. Verwendung eines Fittings (6) nach einem der Ansprüche 1 bis 3 zum Verbinden mit einem Verbund- oder Mehrschichtrohr (8).

8. Verwendung eines Fittings (6) nach einem der Ansprüche 1 bis 3 zum Verbinden mit einem Kunststoffrohr (8).

9. Verwendung nach Anspruch 8,
**dadurch gekennzeichnet,**
**dass** das Kunststoffrohr (8) mit dem Stützkörper (10) mindestens teilweise stoffschlüssig verbunden wird.

## Claims

1. Fitting (6) for connecting in a sealing manner to an end of a pipe comprising a plastic material,
- having a base body (12) and
- having a support body (10),
- wherein the base body (12) consists of a metal,
- wherein the support body (10) is formed as a part which is separate from the base body (12) and is made of a plastic material, and
- wherein the base body (12) on the inside thereof and the support body (10) on the outside thereof have means for connection (46, 48),
**characterized**
- **in that** the base body (12) has a circumferential recess (46) on the inside thereof and the support body (10) has a circumferential tooth (48) on the outside thereof and
- **in that**, in the connected state, the circumferential tooth (48) of the support body (10) is locked into the circumferential recess (46) of the base body (12) durably and sealingly.

2. Fitting according to Claim 1, **characterised in that** the material of the support body (10) has a greater coefficient of thermal expansion than the material of the base body (12).

3. Fitting according to Claim 1 or 2, **characterised in that** the support body (10) is connected oversized to the base body (12).

4. System,
- having a fitting (6) according to any one of Claims 1 to 3,
- having a composite or a multilayer pipe (8),
- having a sleeve (4),
**characterised**
- **in that** the fitting (6) is connected to the composite or the multilayer pipe (8) and
- **in that** the sleeve (4) is pressed together with the fitting (6) and the composite or the multilayer pipe (8).

5. System,
- having a fitting (6) according to any one of Claims 1 to 3,
- having a plastic pipe (8),
- having a sleeve (4),
**characterised**
- **in that** the plastic pipe (8) is firmly bonded to the support body (10) of the fitting (6) and
- **in that** the sleeve (4) is pressed together with the fitting (6) and the plastic pipe (8).

6. System according to Claim 4 or 5, **characterised in that** the support body (10) is formed from a plastic material, from which the pipe (8) to be connected is also at least partly formed.

7. Use of a fitting (6), according to any one of Claims 1 to 3, for connecting to a composite or multilayer pipe (8).

8. Use of a fitting (6), according to any one of Claims 1 to 3, for connecting to a plastic pipe (8).

9. Use according to Claim 8, **characterised in that** the plastic pipe (8) is at least partly firmly bonded to the support body (10).

## Revendications

1. Raccord composite en deux pièces (6) pour le raccordement étanche à une extrémité d'un tube en matière synthétique,
- avec un corps de base (12) et
- avec un corps de support (10),
- sachant que le corps de base (12) est réalisé en métal,
- sachant que le corps de support (10) est réalisé en matière synthétique sous la forme d'une pièce séparée du corps de base (12) et
- sachant que des moyens de liaison (46, 48) sont prévus sur la face intérieure du corps de base (12) et sur la face extérieure du corps de support (10),
**caractérisé en ce que**
- le corps de base (12) est doté, sur sa face intérieure, d'un évidement périphérique (46) et que le corps de support (10) est doté, sur sa face extérieure, d'une dent périphérique (48),
et q u e,
- à l'état relié, la dent périphérique (48) du corps de support (10) et l'évidement périphérique (46) du corps de base (12) sont enclenchés ensemble de manière durablement étanche.

2. Raccord composite en deux pièces selon la revendication 1,
**caractérisé en ce que** le matériau du corps de support (10) est doté d'un coefficient de dilatation thermique plus élevé que celui du matériau du corps de base (12).

3. Raccord composite en deux pièces selon revendication 1 ou 2,
**caractérisé en ce que** la corps de support (10) est relié au corps de base (12) avec une surmesure.

4. Système
- avec un raccord composite en deux pièces (6) selon l'une des revendications 1 à 3,
- avec un tube composite ou formé de plusieurs couches (8),
- avec une douille (4),
**caractérisé en ce que**
- le raccord composite en deux pièces (6) est relié au tube composite ou à plusieurs couches (8) et q u e
- la douille (4) est compressée avec le raccord composite en deux pièces (6) et le tube composite ou formé de plusieurs couches (8).

5. Système
- avec un raccord composite en deux pièces (6) selon l'une des revendications 1 à 3,
- avec un tube en matière synthétique (8),
- avec une douille (4),
**caractérisé en ce que**
- le tube en matière synthétique (8) est relié au corps de support (10) du raccord composite en deux pièces (6) par fusion de matière
et q u e
- la douille (4) est pressée avec le raccord composite en deux pièces (6) et le tube en matière synthétique (8).

6. Système selon revendication 4 ou 5,
**caractérisé en ce que** le corps de support (10) consiste en une matière synthétique avec laquelle le tube à raccorder (8) est également fabriqué, au moins partiellement.

7. Utilisation d'un raccord composite en deux pièces (6) selon l'une des revendications 1 à 3 pour le raccordement à un tube composite ou formé de plusieurs couches (8).

8. Utilisation d'un raccord composite en deux pièces (6) selon l'une des revendications précédentes 1 à 3 pour le raccordement à un tube en matière synthétique (8).

9. Utilisation selon la revendication 8,
**caractérisée en ce que** le tube en matière synthétique (8) est relié, au moins partiellement, au corps de support (10) par fusion de matière.
